# NEUE EUROPÄISCHE PATENTSCHRIFT

(11) **EP 2 933 895 B2**
(45) Veröffentlichungstag und Bekanntmachung des Hinweises auf die Entscheidung über den Einspruch: **03.11.2021**
(45) Hinweis auf die Patenterteilung: 31.10.2018
(21) Anmeldenummer: 14001342.6
(22) Anmeldetag: 14.04.2014
(51) Int. Cl.: H02J 3/38

(54) **Regelverfahren und System mit einem Wechselrichter, einer Gleichstromquelle und einer weiteren Gleichstromquelle oder einer Gleichstromsenke**
Control method and system with an inverter, a direct current source and a further direct current source or a direct current sink
Procédé de réglage et système doté d'un onduleur, d'une source de courant continu et d'une autre source de courant continu ou d'un écoulement de courant continu

(43) Veröffentlichungstag der Anmeldung: 21.10.2015
(73) Patentinhaber: AmbiBox GmbH, 55120 Mainz (DE)
(72) Erfinder: Fieber, Kai, 55291 Saulheim (DE); Przybilla, Manfred, 55120 Mainz (DE); Lehrmann, Sascha, 67295 Bolanden (DE)
(74) Vertreter: Tilmann, Max Wilhelm

(56) Entgegenhaltungen:
- WO-A2-2013/117305

## Beschreibung

Die Erfindung betrifft ein Regelverfahren für ein System, das einen Wechselrichter mit Gleichstromanschluss und eine Gleichstromquelle und eine weitere Gleichstromquelle und eine Gleichstromsenke aufweist, wobei die Gleichstromquelle und die weitere Gleichstromquelle, und die Gleichstromsenke in Parallelschaltung an dem Gleichstromanschluss des Wechselrichters angeschlossen sind. Ferner betrifft die Erfindung auch ein solches System.

Aus WO2013/117305 A2 ist ein Regelverfahren für ein System bekannt, das einen Wechselrichter mit einem Gleichstromanschluss aufweist. An den Gleichstromanschluss ist ein Solargenerator angeschlossen, der bei Bestrahlung mit Licht elektrische Energie in Form einer Gleichspannung bereitstellt. Parallel zu dem Solargenerator ist ein DC/DC-Wandler zugeschaltet, über den Energie aus einem Energiespeicher dem Wechselrichter zugeführt werden kann. Das dort beschriebene Regelverfahren sieht vor, den von dem DC/DC-Wandler an den parallel geschalteten Wechselrichter gespeisten Strom auf einen Strom-Sollwert I_soll zu regeln.

Aus DE 10 2012 109 420 A9 ist ein System mit einem Wechselrichter bekannt, der einen DC/DC-Wandler und einen DC/AC-Wandler aufweist sowie einen Gleichspannungszwischenkreis, an den der DC/DC-Wandler und der DC/AC-Wandler angeschlossen sind. Dieser Wechselrichter hat einen Gleichstromanschluss, nämlich den eingangsseitigen Anschluss des DC/DC-Wandlers. Das System hat in Form einer Photovoltaikanlage (dort als Photovoltaikgenerator bezeichnet) eine Gleichstromquelle. Ferner hat das System in Form einer Batterie ein Bauelement, das sowohl als weitere Gleichstromquelle (bei Leistungsentnahme von der Batterie) als auch als Gleichstromsenke (beim Laden der Batterie) eingesetzt werden kann. Die Photovoltaikanlage und die Batterie sind in Parallelschaltung an dem Gleichstromanschluss des Wechselrichters (am Eingang des DC/DC-Wandlers) angeschlossen. Bei dem aus DE 10 2012 109 420 A9 bekannten System ist ferner vorgesehen, dass die Batterie auch an dem Gleichspannungszwischenkreis angeschlossen ist. Damit soll es ermöglicht werden, die Batterie unter Umgehung des DC/DC-Wandlers unmittelbar mit von der PV-Anlage erzeugter Energie aufzuladen. Die DE 10 2012 109 420 A9 befasst sich mit der Frage, in welchen Betriebszuständen die Batterie unmittelbar durch die PV-Anlage geladen werden soll und in welchen Betriebszuständen die Batterie über den Gleichspannungs-zwischenkreis aufgeladen werden soll.

Vor diesem Hintergrund lag der Erfindung die Aufgabe zugrunde, die Wirtschaftlichkeit des Betriebs eines solchen Systems zu erhöhen.

Diese Aufgabe wird durch das Regelverfahren gemäß Anspruch 1 und durch das System gemäß Anspruch 5 gelöst. Vorteilhafte Ausführungsformen sind in den Unteransprüchen und der hiernach folgenden Beschreibung wiedergegeben.

Die Erfindung geht von dem Grundgedanken aus, den Gleichstromanschluss des Wechselrichters, also die Eingangsseite des Wechselrichters als maßgeblichen Bezugspunkt für eine Regelung zu wählen. Mit dem erfindungsgemäßen Regelverfahren wird es möglich,
- die Spannung an dem Gleichstromanschluss und
- die über den Gleichstromanschluss an den Wechselrichter gelieferte Leistung, bzw. die über den Gleichstromanschluss von dem Wechselrichter gelieferte Leistung für eine vorbestimmte Zeit auf einen vorbestimmten Wert einzuregeln.

Häufig weisen Wechselrichter ein Maximum Power Point (MPP)-Tracking auf. In einer Ausführungsform wird das MPP-Tracking durch einen als Teil des Wechselrichters vorgesehenen Gleichspannungswandler realisiert, der als Hochsetzer, Tiefsetzer oder Inverter geschaltet wird. Die Stelleingriffe, die der Wechselrichter intern während des MPP-Trackings vornimmt, belasten den Wechselrichter, führen zu Eigenerwärmung und Alterung. Mit dem erfindungsgemäßen Regelverfahren wird es möglich, den Spannungs- und Leistungszustand am Eingang des Wechselrichters gleichzuhalten, sodass der Wechselrichter an dem von ihm während des MPP-Trackings gewählten Arbeitspunkt arbeiten kann. Ebenso wird es möglich, den eingangsseitigen Zustand des Wechselrichters so zu beeinflussen, dass dieser einen anderen Punkt wählt, an dem er beispielsweise effizienter arbeitet. Aus diesem Grund ist bei dem erfindungsgemäßen System neben der (ersten) Gleichstromquelle eine weitere Gleichstromquelle und eine Gleichstromsenke vorgesehen. Liefert die erste Gleichstromquelle eine Spannung, bzw. einen Strom, bzw. eine Leistung, die nicht dem vorbestimmten Wert entspricht, so kann durch das Regelverfahren unter Rückgriff auf die weitere Gleichstromquelle ein eingangsseitiger Zustand an dem Gleichstromanschluss eingestellt werden, der dem vorbestimmten Wert entspricht. Vergleichbares gilt für die Gleichstromsenke, die beispielsweise eingesetzt werden kann, wenn die von der ersten Gleichstromquelle bereitgestellte Spannung, bzw. der bereitgestellte Strom, bzw. die bereitgestellte Leistung über dem vorbestimmten Wert liegt.

Der durch das Regelverfahren einzustellende vorbestimmte Wert kann eine Spannung an dem Gleichstromanschluss sein, beispielsweise wenn der Wechselrichter besonders auf das Arbeiten mit einer bestimmten Eingangsspannung ausgelegt ist. Häufig wird der vorbestimmte Wert eine über den Gleichstromanschluss an den Wechselrichter gelieferte Leistung, bzw. die über den Gleichstromanschluss von dem Wechselrichter gelieferte Leistung sein, da eine Vielzahl von Wechselrichtern leistungsbezogen ausgelegt sind. In einer bevorzugten Ausführungsform wird das erfindungsgemäße Regelverfahren so betrieben, dass mindestens zwei der nachgenannten Größen auf einen vorbestimmten Wert eingeregelt werden, nämlich die Spannung an dem Gleichstromanschluss und die über den Gleichstromanschluss an den Wechselrichter gelieferte Leistung, bzw. die über den Gleichstromanschluss von dem Wechselrichter gelieferte Leistung. So sind beispielsweise Ausführungsformen denkbar, bei denen ein primär leistungsbezogen ausgelegter Wechselrichter besonders gut bei einem bestimmten Spannungsniveau an dem Gleichstromanschluss arbeitet. In einem solchen Fall kann das erfindungsgemäße Regelverfahren dazu eingesetzt werden, sowohl die Spannung an dem Gleichstromanschluss auf einen vorbestimmten Wert zu regeln, als auch die über den Gleichstromanschluss über den Wechselrichter gelieferte Leistung, bzw. die über den Gleichstromanschluss von dem Wechselrichter gelieferte Leistung auf einen vorbestimmten Wert zu regeln.

Der vorbestimmte Wert kann auch 0 sein. Beispielsweise kann es gewünscht sein, dass von dem Wechselrichter keine Leistung in ein ausgangsseitig an den Wechselrichter angeschlossenes Netz eingespeist wird. Dies kann erreicht werden, wenn mit dem Regelverfahren die über den Gleichstromanschluss an den Wechselrichter gelieferte Leistung auf den Wert 0 geregelt wird.

Für die Festlegung des vorbestimmten Werts sind verschiedene Herangehensweisen denkbar. Beispielsweise kann die über den Gleichstromanschluss an den Wechselrichter gelieferte Leistung, bzw. die über den Gleichstromanschluss von dem Wechselrichter gelieferte Leistung auf einen Wert festgelegt werden, sodass das unstete Verhalten eines Solarmodulstrangs während eines Tages mit schnellem Wolkenzug im Rahmen der maximalen Transferleistung ausgeglichen werden kann. Die maximale Transferleistung kann die durch die Bauform des Wechselrichters vorgegebene, maximale AC-Leistung sein, die der Wechselrichter abgeben kann. Ebenso kann die maximale Transferleistung geringer als die rein baubedingte AC-Leistung des Wechselrichters sein, beispielsweise wenn der Wechselrichter ausgangsseitig an ein Netz angeschlossen ist und die Netzbetreiber die dauerhafte Abgabe einer bestimmten AC-Leistung fordern. Ebenso kann es sein, dass die Netzbetreiber, ggf. über einen vorbestimmten Zeitraum, eine bestimmte Abnahme von Leistung vorschreiben, so dass die maximale Transferleistung auch einen negativen Wert haben kann. So ist es denkbar, die Netzbelastung eines an der Ausgangsseite des Wechselrichters angeschlossenen Netzes zu minimieren und deshalb die über den Gleichstromanschluss an den Wechselrichtung gelieferte Leistung auf einen maximalen Wert zu begrenzen, bei dessen Überschreiten die Einspeicherung zusätzlicher Energie in einer Batterie (als Beispiel einer Gleichstromsenke) vorgenommen wird. Ebenso kann das erfindungsgemäße Regelverfahren dazu eingesetzt werden, die über den Gleichstromanschluss von dem Wechselrichter gelieferte Leistung auf einen vorbestimmten Wert einzuregeln, der zum jeweiligen Zeitpunkt benötigt wird, um eine bestimmte Menge an Energie aus dem Netz zu ziehen, beispielsweise zur Erhaltungsladung einer als Batteriespeicher ausgebildeten Gleichstromsenke.

In Betriebszuständen, in denen die (erste) Gleichstromquelle überschüssige, durch den Wechselrichter nicht umsetzbare Leistung liefert, kann diese mit dem erfindungsgemäßen Regelverfahren zur späteren Nutzung, beispielsweise am Abend oder in der Nacht sowie beispielsweise zur nachrangigen Ladung eines elektrisch betriebenen Kfz, das dann eine Gleichstromsenke darstellen würde, eingesetzt werden. Dass der Wechselrichter einen Teil der am Gleichstromanschluss bereitgestellten Leistung nicht umsetzen kann, kann man mittels Pulsationsverfahren ermitteln, die die Kennlinie des Modulstranges während der Off-Phasen der Wechselrichtertaktung auslesen können. Beispielsweise kann ein Wechselrichter mit 17 kHz getaktet sein und eine Kontrolleinheit für das erfindungsgemäße Verfahren mit 40 kHz. In den dabei entstehenden Off-Phasen des Wechselrichters können Messungen durchgeführt werden. Ebenso können externe Messglieder, wie beispielsweise Einstrahlungssensoren, die theoretisch verfügbare DC-Leistung des Wechselrichters ermitteln.

Der vorbestimmte Wert wird für eine vorbestimmte Zeit gehalten. Beispielsweise ist es möglich, den vorbestimmten Wert über mehrere Minuten, über mehrere Stunden, über einen Tag und eine Nacht, über mehrere Tage und Nächte, über einen Monat oder über mehrere Monate einzuregeln. Ist beispielsweise gewünscht, dass von dem erfindungsgemäßen System über einen vorbestimmten Zeitabschnitt (Minuten, Stunden, Tage, Monate) eine bestimmte Leistung in ein ausgangsseitig des Wechselrichters vorgesehenes Netz eingespeist wird, so kann dies mit dem erfindungsgemäßen Regelverfahren und dem erfindungsgemäßen System trotz einer möglicherweise nicht kontinuierlich die gleiche Leistung abgebenden ersten Gleichstromquelle realisiert werden, indem Leistung in die Gleichstromsenke eingebracht oder Leistung aus der weiteren Gleichstromquelle entnommen wird, sodass die über den Gleichstromanschluss an den Wechselrichter gelieferte Leistung über den vorgegebenen Zeitraum dem vorbestimmten Wert entspricht, der zur Lieferung einer vorbestimmten Leistung in das Netz notwendig ist. Es sind auch Ausführungsformen möglich, bei denen der vorbestimmte Wert zu verschiedenen Zeiten auf unterschiedliche Werte eingestellt wird, beispielsweise im Tagesverlauf vormittags, mittags, nachmittags und abends andere Werte vorgegeben werden.

In einer bevorzugten Ausführungsform hat der Wechselrichter eine Wechselstromanschluss und das System
- eine zweite Spannungsmessvorrichtung, die die Spannung an dem Wechselstromanschluss messen kann, und/oder
- eine zweite Strommessvorrichtung, die den über den Wechselstromanschluss fließenden Strom messen kann, und/oder
- eine zweite Leistungsermittlungseinheit, die die über den Wechselstromanschluss an den Wechselrichter gelieferte Leistung, bzw. die über den Wechselstromanschluss von dem Wechselrichter gelieferte Leistung ermittelt, bei dem der vorbestimmte Wert in Abhängigkeit eines von der zweiten Spannungsmessvorrichtung, der zweiten Strommessvorrichtung und/oder der zweiten Leistungsermittlungseinheit ermittelten Werts festgelegt wird.

Diese Ausführungsform kann insbesondere bevorzugt dazu eingesetzt werden, die Menge der in das Netz gelieferten Leistung einzustellen.

Der im Rahmen der Erfindung eingesetzte Wechselrichter kann ein Netzwechselrichter sein, der ausgangsseitig an ein Netz angeschlossen ist, das durch einen Netzbetreiber kontrolliert wird. Der Wechselrichter kann aber auch ein sonstiger Umrichter sein oder ein Inselwechselrichter, an den ausgangsseitig ein von dem Wechselrichter, bzw. dem Betreiber des Wechselrichter kontrolliertes AC-Netz angeschlossen ist.

Das erfindungsgemäße System weist einen Wechselrichter mit Gleichstromanschluss und eine Gleichstromquelle und eine weitere Gleichstromquelle und eine Gleichstromsenke auf, wobei die Gleichstromquelle und die weitere Gleichstromquelle, und die Gleichstromsenke in Parallelschaltung an dem Gleichstromanschluss des Wechselrichters angeschlossen sind.

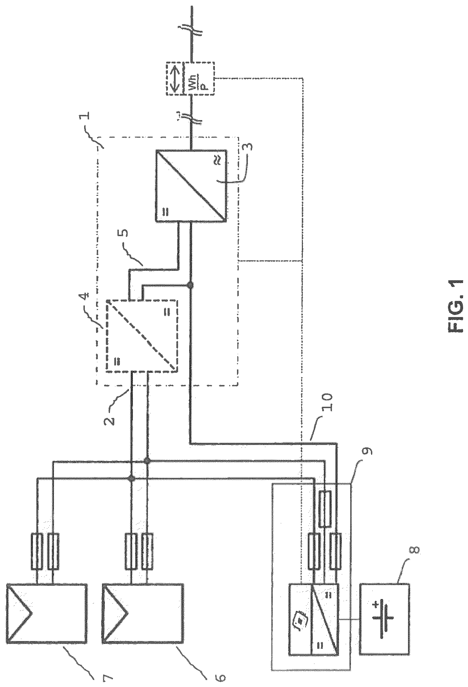

Der Wechselrichter weist zumindest einen DC/AC-Wandler auf. Der Wechselrichter kann neben dem DC/AC-Wandler zudem einen DC/DC-Wandler aufweisen. Dieser DC/DC-Wandler kann dem Gleichstromanschluss nachgeschaltet sein. In einer bevorzugten Ausführungsform dieser Weiterbildung der Erfindung kann ein Gleichspannungszwischenkreis vorgesehen sein, an den der DC/DC-Wandler und ein DC/AC-Wandler angeschlossen sind. In einer besonders bevorzugten Ausführungsform sind die weitere Gleichstromquelle, bzw. die Gleichstromsenke des Systems an den Gleichstromanschluss und an den Gleichspannungszwischenkreis angeschlossen, wie dies beispielsweise in Fig. 1 der DE 10 2012 109 420 A9 gezeigt ist. Ist die Gleichstromquelle an den Gleichspannungszwischenkreis angeschlossen, so besteht die Möglichkeit, das volle Leistungsspektrum des DC/AC-Wandlers des Wechselrichters auszunutzen. In der Praxis sind Wechselrichter bekannt, die auf ein niedrigeres Leistungsniveau ausgelegt sind, beispielsweise hinsichtlich der Betriebsweise ihrer Kontrolleinheit oder hinsichtlich der Auslegung eines möglicherweise vorhandenen DC/DC-Wandlers, bei denen aber aus Gründen der Kostenersparnis ein in Serienproduktion hergestellter, leistungsfähigerer DC/AC-Wandler verbaut wird. Das heißt, dass bei einem solchen Wechselrichter der dort verbaute DC/AC-Wandler leistungsfähiger ist, als es für den gesamten Wechselrichter vorgesehen ist. Die Unternehmen machen sich dabei die Kostenersparnis der Serienproduktion eines einzigen DC/AC-Wandlertyps zunutze und verbauen auch leistungsstärkere DC/AC-Wandler in Wechselrichter, die sie für ein niedrigeres Leistungsniveau vertreiben. Mit der gemäß der bevorzugten Ausführungsform vorgesehenen Kontaktierung der weiteren Gleichstromquelle unmittelbar an den Gleichspannungszwischenkreis und somit unter Umgehung des DC/DC-Wandlers und gegebenenfalls weiterer vorgesehener Komponenten des Wechselrichters entsteht die Möglichkeit, durch Einspeisung weiterer Leistung in den Gleichspannungszwischenkreis aus der weiteren Gleichstromquelle heraus, das volle Leistungsspektrum des in dem Wechselrichter verbauten DC/AC-Wandlers auszunutzen, auch wenn die weiteren Komponenten des Wechselrichters eine solche Ausnutzung des vollen Leistungsspektrum des DC/AC-Wandlers nicht zulassen würden. Somit kann durch Zugabe zusätzlicher Leistung auf den Gleichspannungszwischenkreis eine höhere, über der angegebenen AC-Nennleistung des Wechselrichters liegende Gesamtleistung ermöglicht werden.

Ist gemäß einer bevorzugten Ausführungsform ein separater Anschluss an dem Wechselrichter(gehäuse) vorhanden, über den eine externe Komponente, beispielweise die weitere Gleichstromquelle, bzw. die Gleichstromsenke an einen in einer bevorzugten Ausführungsform vorgesehenen Gleichspannungszwischenkreis des Wechselrichters angeschlossen werden kann, so kann dieser Anschluss auch dazu genutzt werden, weitere Verbraucher mit Gleichspannungsleistung zu versorgen, die der DC/AC-Wandler einem ausgangsseitig an ihm angeschlossenen Netz oder in bevorzugter Bauform einer weiteren angeschlossenen Gleichstromquelle entzieht. Beispielsweise ließe sich über diesen Anschluss und unter Umgehung der DC/AC-Wandlung Notfallenergie zum Betrieb einer Notbeleuchtung, Pumpkreisläufen, beispielsweise bei Umrüstung der Heizungsumwälzpumpe auf DC-Modelle direkt aus dem Gleichspannungszwischenkreis und nach hoch- oder tiefsetzen durch den DC/DC-Wandler abgreifen. Ebenso ließe sich unter Umgehung des DC/DC-Wandlers Notfallenergie unmittelbar aus einem ausgangsseitig an den Wechselrichter angeschlossenen, durch den DC/AC-Wandler gewandelten AC-Netz abgreifen.

Der Wechselrichter kann einen Controller aufweisen, der Stellglieder des Wechselrichters ansteuern kann, um ein MPP-Tracking zu ermöglichen. In einer bevorzugten Ausführungsform hat dieser Controller einen Signalausgang, an dem eine Information über den Arbeitspunkt des Wechselrichters abgegriffen werden kann.

In einer bevorzugten Ausführungsform sind alle Bauteile des Wechselrichters in einem Gehäuse angeordnet. Ist in einer bevorzugten Ausführungsform vorgesehen, dass der Wechselrichter einen Gleichspannungszwischenkreis aufweist und dass die weitere Gleichstromquelle, bzw. die Gleichstromsenke an den Gleichspannungszwischenkreis angeschlossen wird, so kann das Gehäuse neben dem Gleichstromanschluss auch einen Anschluss vorsehen, an den die Gleichstromquelle, bzw. die Gleichstromsenke angeschlossen werden können, um die weitere Gleichstromquelle, bzw. die Gleichstromsenke an den Gleichspannungszwischenkreis anzuschließen.

Das erfindungsgemäße System weist zumindest eine Gleichstromquelle auf, die in dieser Beschreibung teilweise auch als die erste Gleichstromquelle bezeichnet wird. In einer bevorzugten Ausführungsform ist die Gleichstromquelle ein Photovoltaikmodul oder eine auf einem rotatorischen Generator aufbauende Gleichstromquelle, wie beispielsweise eine Windturbine mit Gleichrichter oder eine auf einem thermischen Generator aufbauende Gleichstromquelle, wie beispielsweise eine Dampfturbine mit angeschlossenem Generator und Gleichrichter. Die Gleichstromquelle kann beispielsweise auch eine Brennstoffzelle sein. Neben der in dieser Beschreibung auch als weitere Gleichstromquelle bezeichneten Gleichstromquelle kann das erfindungsgemäße System und das innerhalb des erfindungsgemäßen Regelsystems zu regelnde System eine Vielzahl von Gleichstromquellen aufweisen, beispielsweise mehrere Photovoltaikmodulstränge in Parallelschaltung. Die Arten der Gleichstromquellen können gemischt sein. So sind beispielsweise Systeme denkbar, bei denen Photovoltaikmodule, Windturbinen mit Gleichrichter oder Dampfturbinen mit angeschlossenem Generator und Gleichrichter in Parallelschaltung zueinander verschaltet werden.

Neben der ersten Gleichstromquelle ist in dem erfindungsgemäßen System, bzw. bei dem durch das erfindungsgemäße Regelverfahren geregelten System eine weitere Gleichstromquelle und eine Gleichstromsenke vorgesehen. Dabei sind Ausführungsformen möglich, bei denen eine weitere Gleichstromquelle und eine Gleichstromsenke durch ein Bauelement bereitgestellt werden, beispielsweise durch eine Batterie, die in einem ersten Betriebszustand als Gleichstromquelle und in einem zweiten Betriebszustand als Gleichstromsenke eingesetzt wird, je nachdem, ob der Batterie Leistung entzogen wird, oder ob die Batterie aufgeladen wird. Als Batterie kann eine nur für diesen Zweck vorgesehene Batterie vorgehalten werden. Es ist aber auch denkbar, dass die Batterie Teil eines aus dem System herauslösbaren Objekts, beispielsweise eines batteriebetriebenen Kfz ist. Als Gleichstromsenke kann beispielsweise auch eine reversible Brennstoffzelle vorgesehen sein, die in einem ersten Betriebsmodus als Gleichstromquelle und in einem zweiten Betriebsmodus als Gleichstromsenke eingesetzt wird. Ebenso sind als Gleichstromsenke Baugruppen denkbar, die überflüssige elektrische Energie in thermische Energie umwandeln.

Das erfindungsgemäße System sieht den Einsatz einer Spannungsmessvorrichtung, die die Spannung an dem Gleichstromanschluss messen kann und eine Leistungsermittlungseinheit vor, die die über den Gleichstromanschluss an den Wechselrichter gelieferte Leistung, bzw. die über den Gleichstromanschluss von dem Wechselrichter gelieferte Leistung ermittelt, vor. Durch derartige Messvorrichtungen, bzw. Ermittlungseinheiten wird es dem erfindungsgemäßen Regelverfahren möglich, zu überprüfen, ob der vorbestimmte Wert am Gleichstromanschluss anliegt. Das System kann zusätzlich eine Strommessvorrichtung, die den über den Gleichstromanschluss fließenden Strom messen kann, aufweisen.

Als Spannungsmessvorrichtung, die die Spannung an dem Gleichstromanschluss messen kann, sind beispielsweise Widerstandsnetzwerke oder Spannungsteilerschaltungen denkbar, aber auch jede andere geeignete Vorrichtung.

Als Strommessvorrichtung, die den über den Gleichstromanschluss fließenden Strom messen kann, sind beispielsweise Messung mittels Messhunts oder Stromwandler oder mittels Hall-Sensoren denkbar, aber auch jede andere geeignete Vorrichtung.

Als Leistungsermittlungseinheit vor, die die über den Gleichstromanschluss an den Wechselrichter gelieferte Leistung, bzw. die über den Gleichstromanschluss von dem Wechselrichter gelieferte Leistung ermittelt, sind beispielsweise Energiezähler aber auch die Berechnung über ermittelte Werte Strom und Spannung denkbar, aber auch jede andere geeignete Vorrichtung.

Ebenso ist es denkbar, Spannung, Strom oder Leistung indirekt zu ermitteln, beispielsweise wenn die Modulkenndaten eines als Gleichstromquelle verwendeten PV-Strings bekannt sind. Dann könnte über die Einstrahlung und Temperatur eine Rückrechnung erfolgen.

Vorteile lassen sich bereits erreichen, wenn eine der drei Vorrichtungen, also eine Spannungsmessvorrichtung, eine Strommessvorrichtung oder Leistungsermittlungseinheit vorgesehen werden. Erfindungsgemäß werden jedoch mindestens zwei Vorrichtungen, nämlich eine Spannungsmessvorrichtung und eine Leistungsermittlungseinheit vorgesehen, um den Prozess möglichst genau zu überwachen. Ferner ist es möglich, alle drei Vorrichtungen vorzusehen.

Ferner ist bei dem System ein Stellglied vorgesehen, mit dem die von der Gleichstromquelle abgegebene Leistung eingestellt werden kann. Als Teil des Systems sind mehrere Gleichstromquellen vorgesehen, beispielsweise eine erste Gleichstromquelle, beispielsweise ein Photovoltaikmodul und eine weitere Gleichstromquelle, beispielsweise eine Batterie, so kann bei dem erfindungsgemäßen System entweder nur ein Stellglied vorgesehen sein, beispielsweise ein Stellglied mit dem die an der ersten Gleichstromquelle anliegende Spannung und/oder der von der ersten Gleichstromquelle abgegebene Strom und/oder die von der ersten Gleichstromquelle abgegebene Leistung eingestellt werden kann. Ebenso ist es denkbar, nur ein Stellglied vorzusehen, nämlich eins mit dem die an der weiteren Stromquelle anliegende Spannung und/oder der von der weiteren Gleichstromquelle abgegebene Strom und/oder die von der weiteren Gleichstromquelle abgegebene Leistung einstellt werden kann. Ebenso können auch zwei Stellglieder vorgesehen sein, eines mit dem die an der ersten Gleichstromquelle anliegende Spannung und/oder der von der ersten Gleichstromquelle abgegebenen Strom und/oder die von der ersten Gleichstromquelle abgegebenen Leistung eingestellt werden kann, und eines, mit dem die von der weiteren Gleichstromquelle abgegebene Leistung eingestellt werden kann. Vergleichbare Kombinationsmöglichkeiten bestehen bei dem Vorhandensein einer Gleichstromsenke oder dem Vorhandensein einer weiteren Gleichstromquelle und einer Gleichstromsenke.

Als Ausführungsformen des erfindungsgemäßen Systems sind die in der nachstehenden Tabelle aufgelisteten Kombinationen möglich:
System mit einer Gleichstromquelle und einem Bauteil, das in einem ersten Betriebsmodus als Gleichstromquelle und in einem zweiten Betriebsmodus als Gleichstromsenke eingesetzt werden kann; wobei nur die Varianten 134, 135, 136, 138, 142, 143, 144, 146, 150, 151, 152, 154, 166, 167, 168, 170 erfindungsgemäße Varianten sind:

| Variante | ein Stellglied, mit dem die an der ersten Gleichstromquelle anliegende Spannung eingestellt werden kann | ein Stellglied, mit dem von der ersten Gleichstromquelle abgegebene Strom eingestellt werden kann | ein Stellglied, mit dem die von der ersten Gleichstromquelle abgegebene Leistung eingestellt werden kann | ein Stellglied, mit dem die an dem Bauteil anliegende Spannung eingestellt werden kann | ein Stellglied, mit dem der von dem Bauteil abgegebene Strom eingestellt werden kann | ein Stellglied, mit dem die von dem Bauteil abgegebene Leistung eingestellt werden kann |
|---|---|---|---|---|---|---|
| 127 | Vorhanden | Vorhanden | Vorhanden | Nicht vorhanden | Nicht vorhanden | Nicht vorhanden |
| 128 | Nicht vorhanden | Vorhanden | Vorhanden | Nicht vorhanden | Nicht vorhanden | Nicht vorhanden |
| 129 | Nicht vorhanden | Nicht vorhanden | vorhanden | Nicht vorhanden | Nicht vorhanden | Nicht vorhanden |
| 130 | vorhanden | vorhanden | Nicht vorhanden | Nicht vorhanden | Nicht vorhanden | Nicht vorhanden |
| 131 | Vorhanden | Nicht vorhanden | vorhanden | Nicht vorhanden | Nicht vorhanden | Nicht vorhanden |
| 132 | Vorhanden | Nicht vorhanden | Nicht vorhanden | Nicht vorhanden | Nicht vorhanden | Nicht vorhanden |
| 133 | Nicht vorhanden | Vorhanden | Nicht vorhanden | Nicht vorhanden | Nicht vorhanden | Nicht vorhanden |
| 134 | Vorhanden | Vorhanden | Vorhanden | Vorhanden | Vorhanden | Vorhanden |
| 135 | Nicht vorhanden | Vorhanden | Vorhanden | Vorhanden | Vorhanden | Vorhanden |
| 136 | Nicht vorhanden | Nicht vorhanden | vorhanden | Vorhanden | Vorhanden | Vorhanden |
| 137 | vorhanden | vorhanden | Nicht vorhanden | Vorhanden | Vorhanden | Vorhanden |
| 138 | Vorhanden | Nicht vorhanden | vorhanden | Vorhanden | Vorhanden | Vorhanden |
| 139 | Vorhanden | Nicht vorhanden | Nich vorhanden | Vorhanden | Vorhanden | Vorhanden |
| 140 | Nicht vorhanden | Vorhanden | Nicht vorhanden | Vorhanden | Vorhanden | Vorhanden |
| 141 | Nicht vorhanden | Nicht Vorhanden | Nicht vorhanden | Vorhanden | Vorhanden | Vorhanden |
| 142 | Vorhanden | Vorhanden | Vorhanden | Nicht vorhanden | Vorhanden | Vorhanden |
| 143 | vorhanden | Vorhanden | Vorhanden | Nicht vorhanden | Vorhanden | Vorhanden |
| 144 | Nicht vorhanden | Nicht vorhanden | vorhanden | Nicht vorhanden | Vorhanden | Vorhanden |
| 145 | vorhanden | vorhanden | Nicht vorhanden | vorhanden | Vorhanden | Vorhanden |
| 146 | Vorhanden | Nicht vorhanden | vorhanden | vorhanden | Vorhanden | Vorhanden |
| 147 | Vorhanden | Nicht vorhanden | Nicht vorhanden | Nicht vorhanden | Vorhanden | Vorhanden |
| 148 | Nicht vorhanden | Vorhanden | Nicht vorhanden | Nicht vorhanden | Vorhanden | Vorhanden |
| 149 | Nicht vorhanden | Nicht Vorhanden | Nicht vorhanden | Nicht vorhanden | Vorhanden | Vorhanden |

| Variante | ein Stellglied, mit dem die an der ersten Gleichstromquelle anliegende Spannung eingestellt werden kann | ein Stellglied, mit dem von der ersten Gleichstromquelle abgegebene Strom eingestellt werden kann | ein Stellglled, mit dem die von der ersten Gleichstromquelle abgegebene Leistung eingestellt werden kann | ein Stellglied, mit dem die an dem Bauteil anliegende Spannungeingestellt werden kann | ein Stellglied, mit dem der von dem Bauteil abgegebene Strom eingestellt werden kann | ein Stellglied, mit dem die von dem Bauteil abgegebene Leistung eingestellt werden kann |
|---|---|---|---|---|---|---|
| 150 | Vorhanden | Vorhanden | Vorhanden | Nicht vorhanden | Nicht vorhanden | vorhanden |
| 151 | Nicht vorhanden | Vorhanden | Vorhanden | Nicht vorhanden | Nicht vorhanden | vorhanden |
| 152 | Nicht vorhanden | Nicht vorhanden | vorhanden | Nicht vorhanden | Nicht vorhanden | vorhanden |
| 153 | vorhanden | vorhanden | Nicht vorhanden | Nicht vorhanden | Nicht vorhanden | vorhanden |
| 154 | Vorhanden | Nicht vorhanden | vorhanden | Nicht vorhanden | Nicht vorhanden | vorhanden |
| 155 | Vorhanden | Nicht vorhanden | Nicht vorhanden | Nicht vorhanden | Nicht vorhanden | vorhanden |
| 156 | Nicht vorhanden | Vorhanden | Nicht vorhanden | Nicht vorhanden | Nicht vorhanden | vorhanden |
| 157 | Nicht vorhanden | Nicht Vorhanden | Nicht vorhanden | Nicht vorhanden | Nicht vorhanden | vorhanden |
| 158 | Vorhanden | Vorhanden | Vorhanden | vorhanden | vorhanden | Nicht vorhanden |
| 159 | vorhanden | Vorhanden | Vorhanden | vorhanden | vorhanden | Nicht vorhanden |
| 160 | Nicht vorhanden | Nicht vorhanden | vorhanden | vorhanden | vorhanden | Nicht vorhanden |
| 161 | vorhanden | vorhanden | Nicht vorhanden | vorhanden | vorhanden | Nicht vorhanden |
| 162 | Vorhanden | Nicht vorhanden | vorhanden | vorhanden | vorhanden | Nicht vorhanden |
| 163 | Vorhanden | Nicht vorhanden | Nicht vorhanden | vorhanden | vorhanden | Nicht vorhanden |
| 164 | Nicht vorhanden | Vorhanden | Nicht vorhanden | vorhanden | vorhanden | Nicht vorhanden |
| 165 | Nicht vorhanden | Nicht Vorhanden | Nicht vorhanden | vorhanden | vorhanden | Nicht vorhanden |
| 166 | Vorhanden | Vorhanden | Vorhanden | Vorhanden | Nicht vorhanden | vorhanden |
| 167 | vorhanden | Vorhanden | Vorhanden | Vorhanden | Nicht vorhanden | vorhanden |
| 168 | Nicht vorhanden | Nicht vorhanden | vorhanden | Vorhanden | Nicht vorhanden | vorhanden |
| 169 | vorhanden | vorhanden | Nicht vorhanden | Vorhanden | Nicht vorhanden | vorhanden |
| 170 | Vorhanden | Nicht vorhanden | vorhanden | Vorhanden | Nicht vorhanden | vorhanden |
| 171 | Vorhanden | Nicht vorhanden | Nicht vorhanden | Vorhanden | Nicht vorhanden | vorhanden |

| Variante | ein Stellglied, mit dem die an der ersten Gleichstromquelle anliegende Spannung eingestellt werden kann | ein Stellglied, mit dem von der ersten Gleichstromquelle abgegebene Strom eingestellt werden kann | ein Stellglied, mit dem die von der ersten Gleichstromquelle abgegebene Leistung eingestellt werden kann | ein Stellglied, mit dem die an dem Bauteil anliegende Spannung eingestellt werden kann | ein Stellglied, mit dem der von dem Bauteil abgegebene Strom eingestellt werden kann | ein Stellglied, mit dem die von dem Bauteil abgegebene Leistung eingestellt werden kann |
|---|---|---|---|---|---|---|
| 172 | Nicht vorhanden | Vorhanden | Nicht vorhanden | Vorhanden | Nicht vorhanden | vorhanden |
| 173 | Nicht vorhanden | Nicht Vorhanden | Nicht vorhanden | Vorhanden | Nicht vorhanden | vorhanden |
| 174 | Vorhanden | Vorhanden | Vorhanden | Vorhanden | Nicht vorhanden | Nicht vorhanden |
| 175 | Nicht vorhanden | Vorhanden | Vorhanden | Vorhanden | Nicht vorhanden | Nicht vorhanden |
| 176 | Nicht vorhanden | Nicht vorhanden | vorhanden | Vorhanden | Nicht vorhanden | Nicht vorhanden |
| 177 | vorhanden | vorhanden | Nicht vorhanden | Vorhanden | Nicht vorhanden | Nicht vorhanden |
| 178 | Vorhanden | Nicht vorhanden | vorhanden | Vorhanden | Nicht vorhanden | Nicht vorhanden |
| 179 | Vorhanden | Nicht vorhanden | Nicht vorhanden | Vorhanden | Nicht vorhanden | Nicht vorhanden |
| 180 | Nicht vorhanden | Vorhanden | Nicht vorhanden | Vorhanden | Nicht vorhanden | Nicht vorhanden |
| 181 | Nicht vorhanden | Nicht Vorhanden | Nicht vorhanden | Vorhanden | Nicht vorhanden | Nicht vorhanden |
| 182 | Vorhanden | Vorhanden | Vorhanden | Nicht vorhanden | Vorhanden | Nicht vorhanden |
| 183 | Nicht vorhanden | Vorhanden | Vorhanden | Nicht vorhanden | Vorhanden | Nicht vorhanden |
| 184 | Nicht vorhanden | Nicht vorhanden | vorhanden | Nicht vorhanden | Vorhanden | Nicht vorhanden |
| 185 | vorhanden | vorhanden | Nicht vorhanden | Nicht vorhanden | Vorhanden | Nicht vorhanden |
| 186 | Vorhanden | Nicht vorhanden | vorhanden | Nicht vorhanden | Vorhanden | Nicht vorhanden |
| 187 | Vorhanden | Nicht vorhanden | Nicht vorhanden | Nicht vorhanden | Vorhanden | Nicht vorhanden |
| 188 | Nicht vorhanden | Vorhanden | Nicht vorhanden | Nicht vorhanden | Vorhanden | Nicht vorhanden |
| 189 | Nicht vorhanden | Nicht Vorhanden | Nicht vorhanden | Nicht vorhanden | Vorhanden | Nicht vorhanden |

In einer bevorzugten Ausführungsform werden bei einem mit einem DC/DC-Wandler ausgestatteten Wechselrichter in dem DC/DC-Wandler verbaute Halbleiterschalter als Stellglieder verwendet. Aus der Praxis ist es bekannt, dass in Wechselrichter verbaute DC/DC-Wandler mit zwei Halbleiterschalter ausgestattet sind, die die Aufgabe des Stellglieds übernehmen können, so dass die Erfindung mit handelsüblichen Wechselrichtern umgesetzt werden kann. Die Umsetzung der Erfindung erfolgt dann durch alternative Ansteuermuster der Halbleiterschalter. Ein Vorteil dieser Ausführungsform liegt in der geringen Anzahl der notwendigen Bauteile. Sie kann beispielsweise mit zwei Halbleiterschaltern und zwei Dioden (eine Sperr- und eine Freilaufdiode) realisiert werden. In dieser Ausführungsform erfolgt die Abgabe der Leistung über den hochsetzenden Halbleiterschalter, die Aufnahme von Leistung erfolgt durch den tiefsetzenden Halbleiterschalter. Die Einstellung der Spannung und/oder des Stromes erfolgt dann nur durch geeignete Aussteuer-Verhältnisse derselben.

Alternativ kann anstelle der erwähnten Halbleiterschalter auch ein elektromechanisch wirkender Schalter oder eine sonst wirkende schaltende Funktionsgruppe verwendet werden, derart, dass ein DC/DC-Steller realisiert werden kann.

Ebenso denkbar wäre ein biomechanisch umgesetztes Schaltglied denkbar.

Weiterhin denkbar wäre die Realisierung eines Schaltgliedes auf Basis eines elektromagnetischen Felderzeugers, welcher die Schalthandlung durch Abschnüren oder Öffnen des Elektronenflusses im galvanisch entkoppelten Leiter ermöglicht.

In einer bevorzugten Ausführungsform weist das System einen DC-Bus auf, der an den Gleichstromanschluss angeschlossen ist und an den die Gleichstromquelle und die weitere Gleichstromquelle, bzw. die Gleichstromsenke angeschlossen ist. Der gemeinsame DC-Bus kann eine definierte, konstante Spannung aufweisen. Alternativ kann ein gemeinsamer DC-Bus eingesetzt werden, der eine variable Spannung aufweist.

Das erfindungsgemäße System kann eine übergeordnete Kontrolleinheit aufweisen, die die Kontrolle über alle Energieflüsse des Systems übernimmt und an den Wechselrichter sowie an die weiteren Komponenten des Systems Betriebspunkte vorgibt. Damit ist es zum einen möglich, Betriebssituationen abzubilden, bei der der Wechselrichter in Folge der Überauslegung des Wechselrichters die überschüssige Energie in Richtung der maximalen Leerlaufspannung (nichtlinearer Bereich) ausregelt. Ebenso können Betriebssituationen abgebildet werden, bei denen diese Energie durch Einregeln in den Kurzschlussbereich durch Spannungsverringerung (linearer Bereich) verringert wird. Das System kann somit mehr Leistung umsetzen ohne eine Instabilität im Verhalten der restlichen, angegliederten Baugruppen zu erzeugen. Die Umsetzung der aufgezeigten Eigenschaften wird bevorzugt durch Verändern der Einschalt- und Ausschaltzeiten der vorzugsweise in den einzelnen Baugruppen verbauten Leistungshalbleiter erreicht.
In einer bevorzugten Ausführungsform werden einzelne Elemente des Systems zu einer Box zusammengefasst. Beispielsweise kann die Parallelschaltung der (ersten) Gleichstromquelle mit der weiteren Gleichstromquelle, bzw. der Gleichstromsenke an den Gleichstromanschluss dadurch bereit gestellt werden, dass eine Anschlussbox mit einer Einlassseite an die die erste Gleichstromquelle angeschlossen wird und einer Auslassseite, die an den Gleichstromanschluss angeschlossen wird, vorgesehen sein.

An die Box ist ferner ein Anschluss für die weitere Gleichstromquelle, bzw. die Gleichstromsenke vorgesehen. Innerhalb der Box werden die zu den Anschlüssen führenden Leitungen so verschaltet, dass sich die Parallelschaltung ergibt. Eine solche Box erlaubt eine einfach Handhabung und das Nachrüsten bestehender Systeme zu einem erfindungsgemäßen System, bzw. das Anwenden des erfindungsgemäßen Regelverfahrens auf bestehende Systeme. Um das erfindungsgemäße System bereitzustellen, muss ein bestehendes System, bei dem eine Gleichstromquelle an den Gleichstromanschluss eines Wechselrichters angeschlossen ist, lediglich so modifiziert werden, dass die Gleichstromquelle an den Anschluss der Anschlussbox angeschlossen wird und der Ausgang der Anschlussbox an den Gleichstromanschluss angeschlossen wird. An den weiteren Anschluss der Anschlussbox wird dann die weitere Gleichstromquelle, bzw. die Gleichstromsenke angeschlossen. Es sind auch Ausführungen denkbar, bei denen die weitere Gleichstromquelle, bzw. die Gleichstromsenke nicht separat an einen Anschluss der Anschlussbox angeschlossen wird, sondern in der Anschlussbox integriert ist. Die Anschlussbox kann somit an beliebige Wechselrichter angeschlossen werden.

Die Anschlussbox weist insbesondere bevorzugt eine Kontrolleinheit auf und weist ferner - soweit vorhanden - die Spannungsmessvorrichtung, die die Spannung an dem Gleichstromanschluss messen kann, und/oder die Strommessvorrichtung, die den über den Gleichstromanschluss fließenden Strom messen kann und/oder die Leistungsermittlungseinheit auf, die die über den Gleichstromanschluss an den Wechselrichter gelieferte Leistung, bzw. die über den Gleichstromanschluss von dem Wechselrichter gelieferte Leistung ermittelt. Da in einer bevorzugten Ausführungsform der Ausgang der Anschlussbox unmittelbar an dem Gleichstromanschluss angeschlossen ist, können die Messwerte ohne Informationsverlust an dem Ausgang der Anschlussbox ermittelt werden.

In der Kontrolleinheit können Informationen über verschiedene Wechselrichterkonfigurationen abgelegt sein. Dies erlaubt es, die Anschlussbox als Serienbauteil herzustellen, das durch einfache Auswahl einer Parameterkonfiguration an die Systemkonfiguration, insbesondere an den in dem System vorhandenen Wechselrichter angepasst wird.

Die Anschlussbox ist somit in einer bevorzugten Ausführungsform universell einsetzbar. Das gilt nicht nur hinsichtlich des nachgelagerten Wechselrichters, sondern auch hinsichtlich der verwendeten weiteren Gleichstromquelle, bzw. der verwendeten Gleichstromsenke. So ist es möglich, in der Kontrolleinheit der Anschlussbox alle notwendigen Ladealgorithmen für verschiedene Spannungsebenen und Batterietechniken vorzusehen. Die Anschlussbox kann in einem weiten Spannungsbereich, beispielsweise von 48 VDC bis 1000 VDC Batteriespannungen arbeiten, wobei in einer bevorzugten Ausführungsform durch Strombegrenzung sowohl auf der Eingangs- als auch auf der Ausgangsseite eine Leistungslimitierung im Grenzbereich eingestellt werden kann. In einer bevorzugten Ausführungsform wird die Anschlussbox für eine mittlere Betriebseingangsspannung von ca. 205 VDC konzipiert. Bei einer solchen Konfiguration können beispielsweise 2500 W Leistung transferiert werden. Bei Absenkung der Eingangsspannung kann die Abgabeleistung bei immerhin noch 750 W gehalten werden.

Nachfolgend wird die Erfindung anhand einer lediglich ein Ausführungsbeispiel darstellenden Figur näher erläutert.

Das in der Figur dargestellte System weist einen Wechselrichter 1 mit einem Gleichstromanschluss 2 auf. Der Wechselrichter weist einen DC/AC-Wandler 3 und einen DC/DC-Wandler 4 auf. Ferner weist der Wechselrichter einen Gleichspannungszwischenkreis 5 auf, über welchen der DC/DC-Wandler und der DC/AC-Wandler verbunden sind. Das erfindungsgemäße System weist ferner zwei Gleichstromquellen 6, 7 in Form von Solarmodulen auf. Die Gleichstromquellen 6, 7 sind parallel geschaltet. Ferner weist, das erfindungsgemäße System eine weitere Gleichstromquelle und ein Gleichstromsenke in Form einer Batterie 8 auf, die in einem ersten Betriebsmodus als Gleichstromquelle und in einem zweiten Betriebsmodus als Gleichstromsenke eingesetzt werden kann. Die zwei Gleichstromquellen 6, 7 und die Batterie 8 sind in Parallelschaltung an den Gleichstromanschluss 2 des Wechselrichters 1 angeschlossen. Eine Anschlussbox 9 ist vorgesehen. In dieser Anschlussbox 9 befindet sich insbesondere die Kontrolleinheit und das DC/DC-Stellglied für die Durchführung des erfindungsgemäßen Regelverfahrens. In der Anschlussbox 9 befinden sich ferner die Messvorrichtungen für die über den Gleichstromanschluss 2 anliegende Spannung und den über den Gleichstromanschluss 2 fließenden Strom. Durch die unmittelbare Verschaltung der Anschlussbox 9 an den Gleichstromanschluss 2 in Parallelschaltung können die in der Anschlussbox 9 integrierten Messvorrichtungen diese Messungen vollziehen. Ferner ist ausgangsseitig des Wechselrichters 1 eine Messvorrichtung für die ausgangsseitig abgegebene Leistung vorgehsehen.

Mittels einer zusätzlichen Leitung 10 ist die Anschlussbox und damit die Batterie 8 an den Gleichspannungszwischenkreis 5 angeschlossen.

## Patentansprüche

1. Regelverfahren für ein System, das
einen Wechselrichter (1) mit Gleichstromanschluss (2) und eine Gleichstromquelle (6, 7) und eine weitere Gleichstromquelle und eine Gleichstromsenke aufweist, wobei die Gleichstromquelle (6, 7) und die weitere Gleichstromquelle und die Gleichstromsenke in Parallelschaltung an dem Gleichstromanschluss des Wechselrichters (1) angeschlossen sind,
wobei das System ein Stellglied hat, mit dem die von der Gleichstromquelle (6, 7) abgegebene Leistung eingestellt werden kann, und ein Stellglied hat, mit dem die an der Gleichstromsenke anliegende Spannung und/oder der von der Gleichstromsenke aufgenommene Strom und die von der Gleichstromsenke aufgenommene Leistung eingestellt werden kann,
wobei das System
- eine Spannungsmessvorrichtung, die die Spannung an dem Gleichstromanschluss messen kann, und
- eine Leistungsermittlungseinheit aufweist, die die über den Gleichstromanschluss an den Wechselrichter (1) gelieferte Leistung, bzw. die über den Gleichstromanschluss von dem Wechselrichter (1) gelieferte Leistung ermittelt,
bei dem das Stellglied, mit dem die von der Gleichstromquelle (6, 7) abgegebene Leistung eingestellt werden kann, und das Stellglied, mit dem die an der Gleichstromsenke anliegende Spannung und/oder der von der Gleichstromsenke aufgenommene Strom und die von der Gleichstromsenke aufgenommene Leistung eingestellt werden kann, so gestellt wird, dass
- die Spannung an dem Gleichstromanschluss (2) und/oder
- die über den Gleichstromanschluss (2) an den Wechselrichter (1) gelieferte Leistung, bzw. die über den Gleichstromanschluss (2) von dem Wechselrichter (1) gelieferte Leistung für eine vorbestimmte Zeit
einem vorbestimmten Wert entspricht.

2. Regelverfahren nach Anspruch 1, **dadurch gekennzeichnet, dass** das System eine Strommessvorrichtung, die den über den Gleichstromanschluss fließenden Strom messen kann, aufweist.

3. Regelverfahren nach einem der Ansprüche 1 bis 2, **dadurch gekennzeichnet, dass** der Wechselrichter (1) eine Wechselstromanschluss aufweist und das System
- eine zweite Spannungsmessvorrichtung, die die Spannung an dem Wechselstromanschluss messen kann, und/oder
- eine zweite Strommessvorrichtung, die den über den Wechselstromanschluss fließenden Strom messen kann, und/oder
- eine zweite Leistungsermittlungseinheit aufweist, die die über den Wechselstromanschluss an den Wechselrichter (1) gelieferte Leistung, bzw. die über den Wechselstromanschluss von dem Wechselrichter (1) gelieferte Leistung ermittelt,
bei dem der vorbestimmte Wert in Abhängigkeit eines von der zweiten Spannungsmessvorrichtung, der zweiten Strommessvorrichtung und/oder der zweiten Leistungsermittlungseinheit ermittelten Werts festgelegt wird.

4. Regelverfahren nach einem der Ansprüche 1 oder 2, **dadurch gekennzeichnet, dass** der vorbestimmte Wert so gewählt ist, dass der Wechselrichter (1) an einem vorbestimmten Arbeitspunkt arbeitet.

5. System, das das Regelverfahren gemäß Anspruch 1 durchführt, und das
einen Wechselrichter (1) mit Gleichstromanschluss (2) und eine Gleichstromquelle (6, 7) und eine weitere Gleichstromquelle und eine Gleichstromsenke aufweist, wobei die Gleichstromquelle (6, 7) und die weitere Gleichstromquelle und die Gleichstromsenke in Parallelschaltung an dem Gleichstromanschluss (2) des Wechselrichters (1) angeschlossen sind,
wobei das System ein Stellglied hat, mit dem die von der Gleichstromquelle (6, 7) abgegebene Leistung eingestellt werden kann, und ein Stellglied hat, mit dem die an der Gleichstromsenke anliegende Spannung und/oder der von der Gleichstromsenke aufgenommene Strom und die von der Gleichstromsenke aufgenommene Leistung eingestellt werden kann,
wobei das System
- eine Spannungsmessvorrichtung, die die Spannung an dem Gleichstromanschluss (2) messen kann, und
- eine Leistungsermittlungseinheit aufweist, die die über den Gleichstromanschluss (2) an den Wechselrichter (1) gelieferte Leistung, bzw. die über den Gleichstromanschluss (2) von dem Wechselrichter (1) gelieferte Leistung ermittelt.

6. System nach Anspruch 5, **dadurch gekennzeichnet, dass** die Gleichstromquelle (6, 7) ein Photovoltaikmodul oder ein String von Photovoltaikmodulen oder eine Windturbine mit Gleichrichter oder eine Dampfturbine mit angeschlossenem Generator und Gleichrichter ist.

7. System nach Anspruch 5 oder 6, **dadurch gekennzeichnet, dass** das System eine Batterie (8) aufweist, die in einem ersten Betriebsmodus als Gleichstromquelle (6, 7) und in einem zweiten Betriebsmodus als Gleichstromsenke eingesetzt werden kann.

8. System nach einem der Ansprüche 5 bis 7, **gekennzeichnet durch** einen DC-Bus, der an den Gleichstromanschluss (2) angeschlossen ist und an den die Gleichstromquelle (6, 7) und die weitere Gleichstromquelle, bzw. die Gleichstromsenke angeschlossen ist.

9. System nach einem der Ansprüche 5 bis 8, **dadurch gekennzeichnet, dass** der Wechselrichter (1) einen dem Gleichstromanschluss (2) nachgeschalteten DC/DC-Wandler (4) und einen Gleichspannungszwischenkreis (5) aufweist, an den der DC/DC/-Wandler (4) und ein DC/AC-Wandler (3) angeschlossen sind, wobei die weitere Gleichstromquelle, bzw. die Gleichstromsenke des Systems an den Gleichstromanschluss (2) und an den Gleichspannungszwischenkreis (5) angeschlossen werden kann.

## Claims

1. Control method for a system, which
has an inverter (1) with a direct current connection (2) and a direct current source (6, 7) and a further direct current source and a direct current sink, wherein the direct current source (6, 7) and the further direct current source and the direct current sink are connected in parallel to the direct current connection of the inverter (1),
wherein the system has an actuator with which the power delivered from the direct current source (6, 7) can be adjusted, and has an actuator with which the voltage applied to the direct current sink and/or the current received by the direct current sink and the power received from the direct current sink can be adjusted,
wherein the system
- has a voltage measuring device, which can measure the voltage at the direct current connection, and
- has a power determination unit which determines the power delivered to the inverter (1) by the direct current connection or determines the power delivered by the inverter (1) via the direct current connection,
by means of which the actuator, with which the power delivered by the direct current source (6, 7) can be adjusted, and the actuator with which the voltage applied to the direct current sink and/or the current received by the direct current sink and the power received by the direct current sink can be adjusted, is set such that
- the voltage at the direct current connection (2) and/or
- the power supplied to the inverter (1) through the direct current connection (2), or the power supplied by the inverter (1) through the direct current connection (2) for a predetermined time corresponds to a predetermined value.

2. Control method according to claim 1, **characterised in that** the system has a current measuring device which can measure the current flowing through the direct current connection.

3. Control method according to either of claims 1 to 2, **characterised in that** the inverter (1) has an alternating current connection and the system
- has a second voltage measuring device which can measure the voltage at the alternating current connection, and/or
- has a second voltage measuring device which can measure the current flowing through the alternating current connection, and/or
- has a second power determination unit which determines the power supplied by the alternating current connection to the inverter (1), or determines the power supplied via the alternating current connection by the inverter (1),
from which the predetermined value is determined depending on a value determined by the second voltage measuring device and/or the second power determination unit.

4. Control method according to either of claims 1 or 2, **characterised in that** the predetermined value is selected such that the inverter (1) works at a predetermined operating point.

5. System which performs the control method according to claim 1, and which has an inverter (1) with a direct current connection (2) and a direct current source (6, 7) and a further direct current source and a direct current sink, wherein the direct current source (6, 7) and the further direct current source and the direct current sink are connected in parallel to the direct current connection (2) of the inverter (1),
wherein the system has an actuator with which the power supplied by the direct current source (6, 7) can be adjusted, and has an actuator with which the voltage present at the direct current sink and/or the current accepted by the direct current sink and the power accepted by the direct current sink can be adjusted,
wherein the system
- has a voltage measuring device which can measure the voltage at the direct current connection (2), and
- has a power determination unit which determines the power supplied to the inverter (1) by the direct current connection (2), or the power supplied by the inverter (1) via the direct current connection (2).

6. System according to claim 5, **characterised in that** the direct current source (6, 7) is a photovoltaic module or a string of photovoltaic modules or a wind turbine with a rectifier or a steam turbine connected to a generator and a rectifier.

7. System according to either of claims 5 or 6, **characterised in that** the system has a battery (8) which can be used in a first operating mode as a direct current source (6, 7) and in a second operating mode as a direct current sink.

8. System according to any one of claims 5 to 7, **characterised by** a DC bus which is connected to the direct current connection (2) and is connected to the direct current source (6, 7) and the further direct current source, or to the direct current sink.

9. System according to any one of claims 5 to 8, **characterised in that** the inverter (1) has a DC/DC transformer (4) connected downstream to the direct current connection (2) and has a direct current link (5) to which the DC/DC transformer (4) and a DC/AC transformer (3) are connected, wherein the further direct current source, or the direct current sink of the system can be connected to the direct current connection (2) and to the direct current link (5).

## Revendications

1. Procédé de commande d'un système qui
présente un onduleur (1) avec une connexion à courant continu (2) et une source de courant continu (6, 7) et une autre source de courant continu et un puits de courant continu, la source de courant continu (6, 7) et l'autre source de courant continu et le puits de courant continu étant connectés en parallèle à la connexion à courant continu de l'onduleur (1),
dans lequel le système présente un actionneur, avec lequel la puissance délivrée par la source de courant continu (6, 7) peut être réglée, et un actionneur, avec lequel la tension appliquée au puits de courant continu et/ou le courant consommé par le puits de courant continu et la puissance consommée par le puits de courant continu peuvent être réglés,
dans lequel le système
- présente un dispositif de mesure de tension qui peut mesurer la tension à la connexion à courant continu, et
- une unité de détermination de puissance qui détermine la puissance fournie à l'onduleur (1) via la connexion à courant continu ou la puissance fournie par l'onduleur (1) via la connexion à courant continu,
dans lequel l'actionneur, avec lequel la puissance délivrée par la source de courant continu (6, 7) peut être réglée, et l'actionneur, avec lequel la tension appliquée au puits de courant continu et/ou le courant consommé par le puits de courant continu et la puissance consommée par le puits de courant continu peuvent être réglés, sont disposés de telle sorte que
- la tension à la connexion à courant continu (2) et/ou
- la puissance délivrée à l'onduleur (1) via la connexion à courant continu (2) ou la puissance délivrée par l'onduleur (1) via la connexion à courant continu (2) pendant une durée prédéterminée correspond(ent) à une valeur prédéterminée.

2. Procédé de commande de la revendication 1, **caractérisé en ce que** le système présente un dispositif de mesure de courant qui peut mesurer le courant circulant via la connexion à courant continu.

3. Procédé de commande selon l'une quelconque des revendications 1 à 2, **caractérisé en ce que** l'onduleur (1) présente une connexion à courant alternatif et le système
- présente un deuxième dispositif de mesure de tension, qui peut mesurer la tension au niveau de la connexion à courant alternatif, et/ou
- un deuxième dispositif de mesure de courant, qui peut mesurer le courant circulant via la connexion à courant alternatif, et/ou
- une deuxième unité de détermination de puissance qui détermine la puissance délivrée à l'onduleur (1) via la connexion à courant alternatif ou la puissance délivrée par l'onduleur (1) via la connexion à courant alternatif,
dans lequel la valeur prédéterminée est établie en fonction d'une valeur déterminée par le deuxième dispositif de mesure de tension, le deuxième dispositif de mesure de courant et/ou la deuxième unité de détermination de puissance.

4. Procédé de commande selon l'une quelconque des revendications 1 ou 2, **caractérisé en ce que** la valeur prédéterminée est choisie de telle sorte que l'onduleur (1) travaille à un point de fonctionnement prédéterminé.

5. Système mettant en œuvre le procédé de commande selon la revendication 1, et qui présente un onduleur (1) avec une connexion à courant continu (2) et une source de courant continu (6, 7) et une autre source de courant continu et un puits de courant continu, la source de courant continu (6, 7) et l'autre source de courant continu et le puits de courant continu étant connectés en parallèle à la connexion à courant continu (2) de l'onduleur (1),
dans lequel le système présente un actionneur, avec lequel la puissance délivrée par la source de courant continu (6, 7) peut être réglée, et un actionneur, avec lequel la tension appliquée au puits de courant continu et/ou le courant consommé par le puits de courant continu et la puissance consommée par le puits de courant continu peuvent être réglés,
dans lequel le système
- présente un dispositif de mesure de tension, qui peut mesurer la tension au niveau de la connexion à courant continu (2), et
- présente une unité de détermination de puissance, qui détermine la puissance délivrée à l'onduleur (1) via la connexion à courant continu (2) ou la puissance délivrée par l'onduleur (1) via la connexion à courant continu (2).

6. Système de la revendication 5, **caractérisé en ce que** la source de courant continu (6, 7) est un module photovoltaïque ou une chaîne de modules photovoltaïques ou une éolienne avec redresseur ou une turbine à vapeur avec générateur et redresseur connectés.

7. Système de la revendication 5 ou 6, **caractérisé en ce que** le système présente une batterie (8) qui peut être utilisée comme source de courant continu (6, 7) dans un premier mode de fonctionnement et comme puits de courant continu dans un deuxième mode de fonctionnement.

8. Système selon l'une quelconque des revendications 5 à 7, **caractérisé par** un bus de courant continu qui est connecté à la connexion à courant continu (2) et auquel la source de courant continu (6, 7) et l'autre source de courant continu ou le puits de courant continu sont connectés.

9. Système selon l'une quelconque des revendications 5 à 8, **caractérisé en ce que** l'onduleur (1) comporte un convertisseur CC/CC (4) connecté en aval de la connexion à courant continu (2) et un circuit intermédiaire de tension continue (5) auquel le convertisseur CC/CC (4) et un convertisseur CC/CA (3) sont reliés, de sorte que l'autre source de courant continu ou le puits de courant continu du système peut être connecté à la connexion à courant continu (2) et au circuit intermédiaire de tension continue (5).
